(19) Europäisches Patentamt
European Patent Office
Office européen des brevets

(11) Publication number: **0 429 069 A2**

(12) **EUROPEAN PATENT APPLICATION**

(21) Application number: **90122200.0**

(22) Date of filing: **20.11.90**

(51) Int. Cl.5: **C08L 83/07**, //(C08L83/07, 83:05,83:04)

(30) Priority: **21.11.89 JP 302587/89**

(43) Date of publication of application: **29.05.91 Bulletin 91/22**

(84) Designated Contracting States: **BE DE FR GB**

(71) Applicant: **DOW CORNING TORAY SILICONE COMPANY, LIMITED**
**Mitsui Building No. 6,**
**2-3-16,Nihonbashi-Muromachi**
**Chuo-ku Tokyo 103(JP)**

(72) Inventor: **Mikami, Ryuzo**
**6,1-chome, Yushudai Nishi**
**Ichihara-shi, Chiba Pref.(JP)**
Inventor: **Sugimoto, Sei-ichi**
**6,1-chome, Yushudai Nishi**
**Ichihara-shi, Chiba Pref.(JP)**

(74) Representative: **Spott, Gottfried, Dr.**
**Spott Weinmiller & Partner**
**Sendlinger-Tor-Platz 11**
**W-8000 München 2(DE)**

(54) **Charge-dissipating silicone rubber compositions.**

(57) Long-term charge dissipating ability is imparted to elastomers prepared from organosiloxane compositions curable by a platinum-catalyzed hydrosilation reaction by incorporating into the organosiloxane composition a compatible organopolysiloxane containing at least one alkenyl radical and at least one polyoxyalkylene group that is bonded to silicon by means of an alkylene radical.

EP 0 429 069 A2

Xerox Copy Centre

## CHARGE-DISSIPATING SILICONE RUBBER COMPOSITIONS

This invention relates to a silicone rubber composition. More particularly, this invention relates to a an organosiloxane composition which cures to yield silicone rubber moldings exhibiting an excellent ability to dissipate electrical charges.

Silicone rubbers are used in a variety of applications due to their excellent electrical insulation, heat resistance, cold resistance, and flexibility. These properties are due to the unique structure of the organopolysiloxane molecule.

A shortcoming of many silicone rubbers is their tendency to accumulate electrical charges relatively easily. This property causes a number of problems when these rubbers are used in electrical and electronic devices.

Addition reaction curing silicone rubber compositions that inhibit accumulation of electrical charges are known. These compositions contain a conductive or charge-dissipating additive such as carbon black, silver, copper, polyoxyalkylenes, and polyoxyalkylene adducts.

These additives have a number of disadvantages. They increase the viscosity of the curable silicone rubber composition, thereby reducing its moldability. In addition, the additives may alter the properties of the curable silicone rubber composition or impart a color or other undesirable property to the cured silicone rubber molding, thereby limiting the end-use application of the molding.

While these problems do not arise using compositions in which the charge-dissipating additive is a polyoxyalkylene or a polyoxyalkylene adducts, these additives bleed out from the cured silicone rubber molding, and their effect therefore gradually declines over a period of time.

The objective of the present invention is to provide curable organosiloxane compositions which cure to yield moldings exhibiting an excellent ability to dissipate electrical charges, where this ability does not decrease with the passage of time.

The present inventors discovered that the objective of the present invention can be achieved by the presence in an addition reaction curing organosiloxane composition of an organopolysiloxane containing at least one alkenyl radical and a polyoxyalkylene group that is bonded to silicon through an alkylene radical.

The present invention relates to addition reaction curable silicone rubber compositions that cure to yield moldings exhibiting an excellent long-term ability to inhibit the accumulation of electrical charges. The compositions comprise

(A) 100 weight parts of an organopolysiloxane having at least two silicon-bonded alkenyl groups in each molecule, where substantially all of the silicon-bonded organic groups are hydrocarbon radicals or halogenated hydrocarbon radicals,

(B) an amount of an organohydrogenpolysiloxane containing at least 3 silicon-bonded hydrogen atoms in each molecule sufficient to provide a molar ratio of silicon-bonded hydrogen atoms to alkenyl radicals in said composition of from 0.5 : 1 to 20 : 1, and

(C) an amount of a platinum-containing catalyst sufficient to promote curing of said composition. The additive responsible for the excellent charge-dissipating ability of the present compositions following curing is

(D) from 0.1 to 100 parts by weight of an organopolysiloxane containing in each molecule at least one silicon-bonded alkenyl group and an organic group represented by the formula

$R^1(OR^2)_nOR^3$-

where $R^1$ is an alkyl radical, $R^2$ and $R^3$ are alkylene radicals, and the value of n is from 2 to 52, inclusive.

Ingredient (A) the organopolysiloxane, used in the present compositions invention is the main ingredient. This ingredient is cured by means of an addition reaction with ingredient (B) utilizing the catalytic activity of ingredient (C). Each molecule of ingredient (A) must contain at least two silicon-bonded alkenyl radicals, as exemplified by vinyl, allyl, propenyl and hexenyl. While the alkenyl radicals may be present anywhere in the molecule, they are preferably present at the terminal positions.

The molecular structure of ingredient (A) can be linear or branched, a linear structure being preferred. The molecular weight of ingredient (A) is not specifically restricted, and its consistency can range from a low-viscosity liquids to a very high-viscosity gum. To provide a rubbery elastic cured product, it is advantageous for the viscosity at 25 degrees Centigrade to be at least 100 centipoise.

Other than alkenyl radicals, the silicon-bonded organic groups present in ingredient (A) are hydrocarbon and halogenated hydrocarbon radicals that include but are not limited to alkyl radicals such as methyl, ethyl, and propyl, aryl radicals such as phenyl and perfluoroalkylethyl radicals such as 3,3,3-trifluoropropyl.

Representative examples of ingredient (A) include but are not limited to the following organopolysiloxanes:

dimethylvinylsiloxy-terminated methylvinylpolysiloxanes,
dimethylvinylsiloxy-terminated methylvinylsiloxane-dimethylsiloxane copolymers,
dimethylvinylsiloxy-terminated dimethylpolysiloxanes,
dimethylvinylsiloxy-terminated dimethylsiloxane-methylphenylsiloxane copolymers,
dimethylvinylsiloxy-terminated dimethylsiloxane-diphenylsiloxane-methylvinylsiloxane copolymers,
trimethylsiloxy-terminated dimethylsiloxane-methylvinylsiloxane copolymers,
trimethylsiloxy-terminated dimethylsiloxane-methylphenylsiloxane-methylvinylsiloxane copolymers,
dimethylvinylsiloxy-terminated methyl(3,3,3-trifluoropropyl)-polysiloxanes,
dimethylvinylsiloxy-terminated dimethylsiloxane-methyl(3,3,3-trifluoropropyl)siloxane copolymers, and
polysiloxanes composed of the $CH_2=CH(CH_3)_2SiO_{1/2}$ unit, $(CH_3)_3SiO_{1/2}$ unit, and $SiO_{4/2}$ unit.

Combinations of two or more of these organopoly-siloxanes may be used in the present compositions.

The organohydrogenpolysiloxane (Ingredient B) is a crosslinker for ingredient (A) and ingredient (D). The present compositions are cured by an addition reaction between the silicon-bonded hydrogen atoms of ingredient (B) and the alkenyl radicals in ingredients (A) and (D) employing the catalytic activity of ingredient (C).

Ingredient (B) must contain at least 3 silicon-bonded hydrogen atoms in each molecule. The molecular structure of ingredient (B) is not specifically restricted, and may be any of straight chain, straight chain containing branch points, cyclic, and so forth. The molecular weight of ingredient (B) is likewise not specifically restricted, but viscosities at 25 degrees Centigrade of 1 to 50,000 centipoise are preferred for improving the compatibility with ingredients (A) and (D).

The concentration of ingredient (B) is sufficient to provide a molar ratio of silicon-bonded hydrogen atoms present in this ingredient to alkenyl radicals present in ingredients (A) and (D) of from 0.5 : 1 to 20 : 1.

It is difficult to obtain good curing properties when this molar ratio falls below 0.5 : 1. On the other hand, when this value exceeds 20 : 1, there is an undesirable tendency for the cured product to become too hard when heated. When the curable composition contains an additional organopolysiloxane with a large concentration of alkenyl radical for the purpose of strengthening the cured material or other reason, a supplementary addition of this SiH-containing ingredient (B) should be made simply to counterbalance these additional alkenyl radicals.

Specific examples of ingredient (B) include but are not limited to:
trimethylsiloxy-terminated methylhydrogenpolysiloxanes, trimethylsiloxy-terminated dimethylpolysiloxane-methylhydrogenpolysiloxane copolymers,
dimethylhydrogensiloxy-terminated dimethylpolysiloxane-methylhydrogenpolysiloxane copolymers,
dimethylpolysiloxane-methylhydrogenpolysiloxane cyclic copolymers,
copolymers composed of the $(CH_3)_2HSiO_{1/2}$ unit and the $SiO_{4/2}$ unit, and
copolymers composed of the $(CH_3)_3SiO_{1/2}$ unit, the $(CH_3)_2HSiO_{1/2}$ unit, and the $SiO_{4/2}$ unit.

Ingredient (C) of the present compositions is a catalyst for the addition reaction of the silicon-bonded hydrogen atoms in ingredient (B) and the alkenyl radicals present in ingredients (A) and (D).

Preferred catalysts include but are not limited to chloroplatinic acid, chloroplatinic acid dissolved in alcohol or ketone, chloroplatinic acid/olefin complex compounds, chloroplatinic acid/alkenylsiloxane complex compounds, chloroplatinic acid/diketone complex compounds, platinum black, and platinum supported on a carrier. The concentration of ingredient (C) should be equivalent to from 0.1 to 500 weight parts of platinum metal for each million weight parts (ppm) of the total quantity of ingredients (A), (B), and (D).

The cross linking reaction will not proceed satisfactorily at a platinum concentration of less than 0.1 ppm. On the other hand, exceeding 1,000 ppm of platinum is uneconomical because expensive platinum will then be used unnecessarily. The concentration of ingredient (C) is preferably equivalent to from 1 to 100 ppm of platinum metal.

The presence of a polyoxyalkylene-substituted organopolysiloxane (Ingredient D) containing at least on alkenyl radical per molecule is the characterizing feature of the present curable compositions, and is responsible for the long-term charge dissipating ability exhibited by cured elastomers prepared from these compositions. The polyoxyalkylene group is represented by the formula

$R^1 - ( O R^2 )_n O R^3 -$

where $R^1$ represents an alkyl radical that includes but is not limited to methyl, ethyl and propyl; $R^2$ and $R^3$ represent alkylene radicals that included but are not limited to methylene, ethylene, and propylene; and the value of n is from 2 to 52.

The remaining silicon-bonded organic groups other than the aforementioned alkenyl radicals and polyoxyalkylene group are selected from the same monovalent hydrocarbon and halogenated hydrocarbon radicals present in ingredient (A).

Various methods are available for the preparation of ingredient (D). A preferred method involves the following steps:

A dichlorosilane containing a polyoxyalkylene group as a substituent is prepared by an addition reaction between (1) methyldichlorosilane and (2) a polyoxyalkylene exhibiting a molecular weight of from 200 to 3,000 and containing an aliphatically unsaturated hydrocarbon radical at one molecular chain terminal and an aliphatically saturated hydrocarbon radical at the other molecular chain terminal. This reaction product is then condensed with a diorganopolysiloxane having a silanol group at both terminal positions to yield a diorganopolysiloxane containing the polyoxyalkylene group as a side chain and a hydroxyl group at both terminal positions.

As the final step a dialklalkenylsiloxy group is introduced at each terminal position by reacting a dialkylalkenylchlorosilane with the hydroxyl groups at both terminal positions of this diorganopolysiloxane.

The equations for these reactions can be written as follows.

<u>(1) The addition reaction</u>

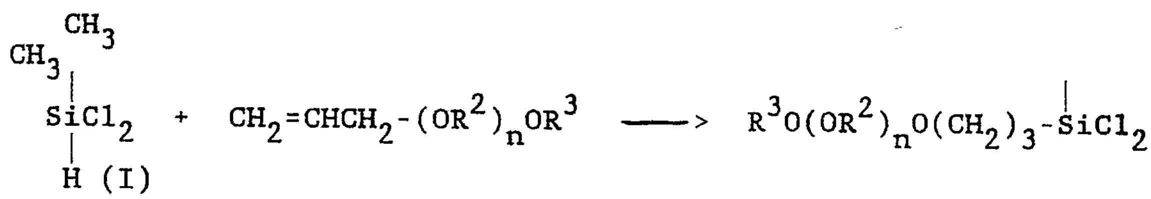

In the preceding equation, $R^3$ represents an alkyl radical such as methyl, ethyl, or propyl, and $R^2$ is an alkylene radical such as methylene, ethylene, or propylene.

<u>(2) The condensation reaction</u>

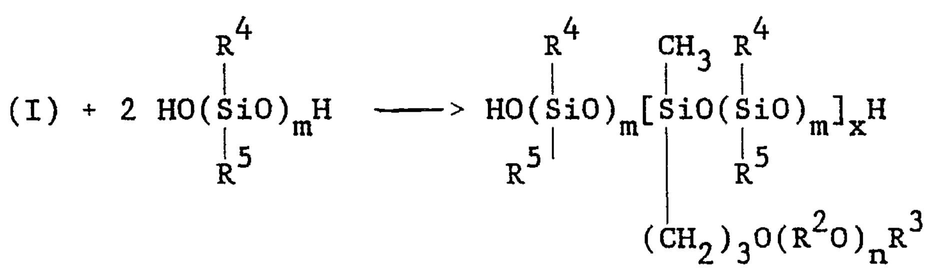

In the preceding equation $R^4$ and $R^5$ represent monovalent hydrocarbon radicals that include but are not limited to alkyl radicals such as methyl, ethyl and propyl; alkenyl radicals such as vinyl, allyl, propenyl, and hexenyl; and aryl radicals such as phenyl; <u>m</u> and <u>x</u> are integers having a value of at least 1.

<u>(3) The chain-blocking reaction</u>

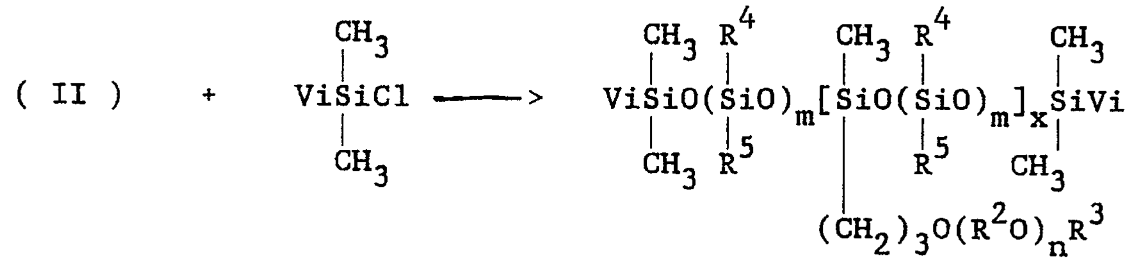

Vi represents a vinyl radical in the preceding equation.

The molecular weight of ingredient (D) will generally be at least 1,000 but is preferably less than 1,000,000 because excessively high molecular weights are detrimental to the production of this ingredient.

The molecular weight of ingredient (D) can be controlled by the choice of the molecular weight of the diorganopolysiloxane in the aforementioned condensation reaction step (2) and also by the choice of the molar ratio of diorganopolysiloxane to dichlorosilane in this step. For example, when higher molecular weight diorganopolysiloxanes are required, this molar ratio should be around 1. Lower molar ratios should be used when a low molecular weight diorganopolysiloxane Is required.

Another method for preparing ingredient (D) is by the polymerization to equilibrium under acid or alkali catalysis of an organopolysiloxane containing silicon-bonded polyoxyalkylene and an organopolysiloxane containing silicon-bonded alkenyl radicals.

The weight percent of the silicon-bonded polyoxyalkylene group in ingredient (D) is crucial for obtaining good charge dissipating properties. The desired good charge dissipation cannot be obtained when the concentration of oxyalkylene groups is less than about 0.5 weight percent. A concentration of at least 1 weight percent is preferred, at least 3 weight percent being most preferred.

As may be inferred from the structure of ingredient (D), it is highly compatible with both ingredient (A) and ingredient (C). In contrast to the simple blending into the curable composition of a polyoxyalkylene or adduct thereof, the introduction of the polyoxyalkylene group into the matrix of cured elastomer by means of an addition reaction employing the alkenyl radical(s) present in ingredient (D) diminishes the decrease in the charge-dissipation performance with the passage of time, and its effect is therefore retained over longer time periods.

As long as the object of the present invention is not compromised, the present curable compositions can optionally contain additives which inhibit the curing reaction. Useful reaction inhibitors include but are not limited to acetylenic compounds, hydrazine compounds, triazoles, and phosphines in the amounts necessary for obtaining the desired curing rate.

The following optional ingredients can also be added as required: pigments, heat stabilizers, flame retardants, plasticizers, and organopolysiloxanes containing one alkenyl radical in each molecule for the purpose of lowering the modulus of the cured elastomer.

Optionally, a reinforcing filler can be included in the curable composition to adjust the fluidity or improve the mechanical strength of the molding, and these fillers are exemplified by precipitated silica, fumed silica, calcined silica, fumed titanium oxide, and so forth. Moreover, an extender filler may also be added, not so much for improving the strength as for cost reduction. These fillers are exemplified by but not limited to quartz powder, diatomaceous earth, asbestos, aluminosilicic acid, iron oxide, zinc oxide, and calcium carbonate. These fillers may be used in their original form, or the surface of the filler can be treated with an organosilicon compound such as hexamethyldisilazane, trimethylchlorosilane, and hydroxyl-terminated dimethylpolysiloxanes.

The present compositions can be prepared simply by blending ingredients (A) through (D) to homogeneity.

## Examples

Preferred curable compositions of this invention are described in the following non-limiting examples. In these illustrative examples all parts and percentages are by weight, and viscosities were measured at 25 degrees Centigrade.

The charge-dissipation performance of cured elastomers prepared from the compositions was measured using the following method.

The curable organosiloxane composition was placed between platens of a hydraulic press maintained at 170 degrees Centigrade and compression molded for 5 minutes to yield a 2 mm-thick sheet of silicone rubber. This cured sheet was placed at the bottom of an electrical discharge device and charged for approximately 2 minutes at 2,000 volts. Charging was discontinued when the charge on the surface of the silicone rubber sheet reached 2,000 volts.

A measurement of the variation in the charge on the surface of the silicone rubber sheet as a function of time was then immediately begun using a surface potential meter manufactured by the Monroe Electronic Corporation (Model 244).

Reference Example 1

Synthesis of a dichlorosilane having side-chain polyoxyethylene groups

76.6 Parts of toluene and 201.6 parts of a polyoxyalkylene compound represented by the formula

$CH_3O(CH_2CH_2O)_nCH_2\text{-}CH=CH_2$

where n has a value of 8 were placed in a 500 cc-capacity four-neck flask equipped with a reflux condenser, stirrer, and thermometer. After removal of the water by azeotropic distillation and cooling of the resultant mixture to 30 degrees Centigrade, a tetrahydrofuran solution of chloroplatinic acid was added in a quantity which provided a chloroplatinic acid concentration of 0.005% in the final reaction mixture. Methyldichlorosilane was then gradually added from an addition funnel. This addition was accompanied by a gradual increase in the temperature of the reaction mixture due to the heat generated by the addition reaction. Following completion of the addition, the reaction mixture was heated for 1 hour at 70 degrees Centigrade.

When the resultant reaction mixture was analyzed using proton nuclear magnetic resonance (NMR) the chemical shift originating from the allyloxy group was not observed, which confirmed completion of this addition reaction.

After completion of the addition reaction, the unreacted methyldichlorosilane and low boiling liquids such as toluene were distilled off under reduced pressure to yield 246.0 parts of a dichlorosilane having side-chain polyoxyethylene groups. This silane was found to contain 11.4 percent chlorine, less than the theoretical chlorine content of 13.1 percent.

It is believed that this difference in chlorine content is due to the presence in the starting material of impurities such as unreactive cyclic polyethylene oxide and other materials.

Reference Example 2

Synthesis of a Dimethylpolysiloxane With Side-Chain Polyoxyethylene Groups

900 Parts of a silanol-terminated dimethylpolysiloxane exhibiting a molecular weight of 3,000 and 300 parts toluene were introduced into a 5 liter-capacity four-neck flask equipped with a reflux condenser, stirrer, and thermometer. After the azeotropic removal of water from the reaction mixture system as described in Reference Example 1 and cooling to 70 degrees Centigrade, 51.3 parts anhydrous triethylamine were added to the reactor. 156.3 Parts of the dichlorosilane prepared in Reference Example 1 were then added through the addition funnel over a 2 to 3 hour period. The reaction mixture was maintained at a temperature of 70° C.for 4 hours following completion of the dichlorosilane addition.

At this time an additional 31.4 parts of anhydrous triethylamine were added to the reactor, followed by the addition of 25.0 parts dimethylvinylchlorosilane through the addition funnel over 1 hour. Following completion of the dimethylvinylchlorosilane addition, the reaction was allowed to continue for 6 hours at the same temperature, at which time the amine salt was removed by filtration, and the toluene in the filtrate was distilled off under reduced pressure.

The final reaction product, a polysiloxane, was a thick, semitransparent, light yellow liquid. To improve the purity of this product, low-molecular-weight substances were removed by adding 4 liters of methanol, stirring the resultant mixture for 10 minutes, finally allowing the resultant solution to remain under ambient conditions. The polysiloxane layer and methanol layer were separated and the methanol layer was discarded. Another 4 liters of methanol were added, and the process was repeated. The methanol which had dissolved in dissolved in the polysiloxane was then distilled off under reduced pressure to yield 790 parts dimethylpolysiloxane containing the polyoxyethylene group as a side chain.

This dimethylpolysiloxane was a transparent liquid with a viscosity of 2,280 centipoise. Its weight average molecular weight, measured using gel permeation chromatography (GPC), was 43,000, and the

silicon-bonded vinyl radical content was 0.11 weight%. The concentration of polyoxyethylene units, measured using proton-NMR, was 8.0 percent. The calculated content of polyoxyethylene units based on initial reactant, was 9.4 weight%. This difference was due to unreacted cyclic polyethers and other impurities as noted in Reference Example 1. These impurities were removed by methanol extraction during the purification process. This methanol extraction also simultaneously removed impurities such as amine, etc., as well as addition reaction-inhibiting factors.

## Example 1

The following ingredients were blended into 100 parts of a dimethylvinylsiloxy-terminated dimethylpolysiloxane exhibiting a viscosity of 2,000 centipoise (2 Pa.s) and a vinyl radical content of 0.23 weight percent: 10 parts of dry-method silica with a specific surface area of 200 $m^2/g$, 30 parts of crushed quartz with an average particle size of 5 micrometers, and 2.5 parts of a trimethylsiloxy-terminated methylhydrogenpolysiloxane exhibiting a viscosity of 10 centipoise (0.01 Pa.s) and a silicon-bonded hydrogen atom content of 0.8 percent. Into this mixture were blended 0.5 parts of an isopropanol solution of chloroplatinic acid exhibiting a platinum content of 1 percent followed by ten parts of the polyoxyethylene side chain-containing dimethylvinylsiloxy-terminated polysiloxane prepared in Reference Example 2 to yield a curable organosiloxane composition of this invention.

Following the previously described procedure for measuring the charge-dissipation characteristic, the curable organosiloxane composition was molded into a 2-mm thick silicone rubber sheet using a press heated at a temperature of 170 degrees Centigrade and a 5 minute heating cycle. The charge-dissipating performance of this silicone rubber sheet was measured, and the results reported in Table 1.

For comparative purposes a silicone rubber composition was prepared as described in the preceding section of this example but omitting the polyoxyethylene side chain-containing polysiloxane (ingredient D of the present compositions). The charge-dissipating performance of the comparative sample was measured and these results are also reported in Table 1.

Table 1

| | Example 1 | Comparison Example 1 |
|---|---|---|
| initial charge | - 1630 V | - 2100 V |
| charge after 1 minute | - 215 V | - 2098 V |
| charge after 2 minutes | - 130 V | - 2076 V |
| charge after 3 minutes | - 80 V | - 2012 V |
| charge after 4 minutes | - 53 V | - 2001 V |
| charge after 5 minutes | - 41 V | - 1998 V |

## Example 2

A silicone rubber sheet prepared as in Example 1 was immersed in toluene, allowed to stand for 24 hours at room temperature, removed, dried, and its weight change measured. The charge-dissipation performance of the dried silicone rubber sheet was measured as in Example 1.

For the comparison examples, the charge-dissipation performance was similarly measured on the silicone rubber composition of Comparison Example 1 as well as on a silicone rubber composition (Comparison Example 2) which contained a trimethylsiloxy-terminated, polyoxyethylene side chain-containing polysiloxane as the charge dissipating additive. This additive was prepared by substituting trimethylchlorosilane for the dimethylvinylchlorosilane in the procedure described in Example 1.

The results of these measurements are also reported in Table 2. Table 2 demonstrates that the weight change after toluene immersion for the silicone rubber sheet prepared using a curable composition of this invention is less than the weight loss for Comparison Example 2. In addition, the silicone rubber of the present invention retained much of its initial charge dissipation properties following immersion in toluene, while the charge dissipation of Comparison Example 2 resembles that of Comparison Example 1, which did

not contain ingredient (D) of the present curable compositions.

It may therefore be concluded that the dimethylvinylsiloxy-terminated, polyoxyethylene side chain-containing polysiloxane obtained in Reference Example 2 was indeed incorporated into the cured silicone rubber matrix by the addition reaction.

Table 2

| Property | Sample | | |
|---|---|---|---|
| | Example 1 | Comparison Example 2 | Comparison Example 1 |
| Weight change due to toluene extraction (see note 1) | - 2.1 | - 9.8 | - 1.7 |
| Charge dissipation (see note 2) | | | |
| initial charge | - 1827 V | - 1951 V | - 2080 V |
| charge after 1 minute | - 654 V | - 1760 V | - 2078 V |
| charge after 2 minutes | - 399 V | - 1674 V | - 2075 V |
| charge after 3 minutes | - 275 V | - 1603 V | - 2070 V |
| charge after 4 minutes | - 201 V | - 1559 V | - 2063 V |
| charge after 5 minutes | - 145 V | - 1542 V | - 2057 V |
| note 1: Weight change in silicone rubber sheet after toluene immersion: %<br>note 2: Charge dissipation of the dried silicone rubber sheet after toluene immersion | | | |

Example 3

50 Parts of crushed quartz with average particle size of 5 micrometers and 2.3 parts of a trimethylsiloxy-terminated methylhydrogenpolysiloxane exhibiting a viscosity of 8 centipoise (0.008 Pa. s) and a silicon-bonded hydrogen atom content of 0.7 percent were blended to homogeneity into 100 parts of a methylphenylvinylsiloxy-terminated dimethylpolysiloxane exhibiting a viscosity of 3,000 centipoise (3 Pa. s) and a vinyl radical content of 0.20 percent. A curable organosiloxane composition of this invention was obtained by the further addition of 0.1 part of a platinum compound in the form of a chloroplatinic acid/methylvinylpolysiloxane complex having a platinum content of 0.5 percent and 8 parts of a dimethylvinylsiloxy-terminated polyoxyethylene side chain-containing polysiloxane prepared as described in Reference Example 2.

This composition was cured and the charge dissipation performance of the resultant silicone rubber was evaluated as described in Example 1. This cured rubber sheet was placed on a sheet of filter paper and compressed under a pressure of 3 $kg/cm^2$, for 500 hours at a temperature of 70 degree Centigrade. The sheet was then removed and its charge dissipation performance again measured. These results are reported in Table 3.

The same evaluations were carried out using the composition of Comparison Example 3, which was prepared as described in Reference Example 2, but substituting trimethylchlorosilane for the dimethylvinylchlorosilane These results are also reported in Table 3.

The results in Table 3 make it clear that, even upon long-term exposure to pressure at elevated temperature, the polyoxyethylene side chain-containing polysiloxane did not bleed out from the cured composition of the present invention, which confirms the excellent long-term charge dissipation performance exhibited by cured silicone rubbers prepared using the present compositions.

Table 3

| | Example 3 | | Comparison Example 3 | |
|---|---|---|---|---|
| measured values | initial (note 3) | after pressing (note 4) | initial (note 3) | after pressing (note 4) |
| initial charge | -1799 V | -1811 V | -1840 V | -1960 V |
| charge after minute | -1032 V | -1198 V | -935 V | -1498 V1 |
| charge after 2 minutes | -696 V | -821 V | -700 V | -1243 V |
| charge after 3 minutes | -491 V | -597 V | -357 V | -1129 V |
| charge after 4 minutes | -398 V | -489 V | -278 V | -1070 V |
| charge after 5 minutes | -362 V | -432 V | -239 V | -1017 V |

note 3: Measurement results for the cured silicone rubber sheet prior to thermal ageing

note 4: Measurement results for the cured silicone rubber sheet after thermal ageing under the specified conditions of pressure and temperature

## Claims

1. In a silicone rubber composition comprising

(A) 100 parts by weight of a first organopolysiloxane having at least 2 silicon-bonded alkenyl radicals in each molecule wherein substantially all of the organic substituents bonded to silicon are hydrocarbon radicals or halogenated hydrocarbon radicals,

(B) an amount of an organohydrogenpolysiloxane containing at least 3 silicon-bonded hydrogen atoms in each molecule sufficient to provides a molar ratio of silicon bonded hydrogen atoms to alkenyl radicals in said composition of from 0.5 : 1 to 20 : 1, and

(C) an amount of a platinum-containing catalyst sufficient to promote curing of said composition,

the improvement comprising the presence in said composition of an additive to inhibit accumulation of electrical charges, said additive consisting essentially of

(D) from 0.1 to 100 parts by weight of a second organopolysiloxane containing in each molecule at least 1 silicon-bonded alkenyl radical and a silicon-bonded substituent of the formula

$R^1(OR^2)_nOR^3$-

where $R^1$ represents an alkyl radical, $R^2$ and $R^3$ represent alkylene radicals, and the value of $\underline{n}$ is from 2 to 52, inclusive.